# EUROPEAN PATENT SPECIFICATION

(11) **EP 3 205 990 B1**
(45) Date of publication and mention of the grant of the patent: **07.07.2021**
(21) Application number: 15849366.8
(22) Date of filing: 09.10.2015
(51) Int. Cl.: G01G 3/14, G01L 1/22, G01B 7/16

(54) **WEIGHING SENSOR, WEIGHING NETWORK AND MONITORING METHOD**
WÄGEAUFNEHMER, WÄGENETZWERK UND ÜBERWACHUNGSVERFAHREN
CAPTEUR DE PESAGE, RÉSEAU DE PESAGE ET PROCÉDÉ DE SURVEILLANCE

(30) Priority: 09.10.2014 CN 201410529715
(43) Date of publication of application: 16.08.2017
(73) Proprietor: Mettler Toledo (Changzhou) Precision Instrument Ltd., Changzhou, Jiangsu 213022 (CN); Mettler Toledo (Changzhou) Measurement Technology Ltd., Jiangsu 213125 (CN); Mettler Toledo (Changzhou) Scale&System Ltd., Changzhou, Jiangsu 213125 (CN)
(72) Inventor: ZHANG, Ying, Changzhou Jiangsu 213022 (CN); WU, Jianwei, Changzhou Jiangsu 213022 (CN); WANG, Wei, Changzhou Jiangsu 213022 (CN); WEN, Fenglian, Changzhou Jiangsu 213022 (CN); LIN, Zhitie, Changzhou Jiangsu 213022 (CN)
(74) Representative: Mettler-Toledo
(86) International application number: PCT/CN2015/091554
(87) International publication number: WO 2016/055016

(56) References cited:
- WO-A1-2014/154633
- CN-A- 1 062 036
- CN-A- 103 592 904
- CN-U- 202 022 663
- CN-U- 202 648 766
- US-A- 5 076 375
- US-A1- 2002 066 602
- US-A1- 2013 269 449

## Description

### Technical field

The present invention relates to the technical field of monitoring and diagnosing, and in particular to a weighing network based on digital sensors and a monitoring method therefor.

### Background

In modern industrial production procedures, weight information has always become a key information source and control target. For example, in vehicle weigh systems, weight information is the final output data required. In filling lines, weight information becomes the control target of filling production procedures. Therefore, the reliability and precision of weighing are of great significance.

With the development of digitalization and information technology, the traditional weighing systems start to step into a digital weighing system era. A circuit with a high accuracy analog-to-digital conversion function and digital processing capability is built in a sensor to convert load stress information about the sensor into a digital signal. One or more digital load cells interact data and instructions with terminal devices such as an instrument and an industrial personal computer in a wired of wireless communication manner to form a weighing communication topology network together to send formatted weighing data to the terminal devices such as the instrument and the industrial personal computer for final processing and display.

In existing digital weighing systems, terminal devices such as an instrument and an industrial personal computer are the core of data processing, which process data received from the digital load cell into weighing data of the weighing system. In the meantime, overload information, temperature data and calibration information about a digital sensor node are recorded. However, important information such as the complicated usage process, network health conditions, service life and weight element states of the digital weighing system cannot be monitored, analysed and diagnosed. With the increasing of the service time of the digital weighing system, some failures and problems of the load cell may unavoidably appear, which makes the state of the sensor unstable and the reliability and precision reduced. Since the digital weighing system is composed of various digital sensors, the problem of a digital load cell may result in reduced reliability and precision of the entire digital weighing system.

In the prior art, it is unable to effectively monitor and diagnose the running conditions of the digital weighing system itself.

Document US5076375 discloses a digital load cell with strain gauges arranged in a Wheatstone bridge circuit that is electrically connected in series with a temperature sensitive resistor.

### Summary

The present invention is intended to propose a method capable of monitoring a weighing network composed of digital load cells, and a corresponding weighing network and a load cell thereof.

According to an embodiment of the present invention, a load cell is proposed, comprising: four strain gauges, a digital-to-analog conversion circuit and a signal processor.

The four strain gauges comprise a first strain gauge SG1, a second strain gauge SG2, a third strain gauge SG3 and a fourth strain gauge SG4, the four strain gauges being mounted on a surface of a sensor elastomer and located in a force measurement region of the sensor elastomer, and the four strain gauges being connected to form a Wheatstone bridge and then form a strain bridge with a temperature sensing element.

A digital-to-analog conversion circuit contains a reference voltage end (Vref), a grounding end (GND), a plurality of input channels and a digital output end (Dout), the digital-to-analog conversion circuit incenting the strain bridge via the reference voltage end (Vref) and the grounding end (GND), and receiving feedback signals of the strain bridge respectively via the plurality of input channels, and the feedback signals being output via the digital output end (Dout).

A signal processor receives the feedback signals from the output end Dout of the digital-to-analog conversion circuit, and the signal processor comprises a load stress calculation unit and a state information matrix calculation unit, the load stress calculation unit obtaining a load stress value through calculation according to the feedback signals, and the state information matrix calculation unit obtaining a state information matrix through calculation according to the feedback signals.

In one embodiment, the plurality of input channels comprise a first input channel (CH1), a second input channel (CH2) and a third input channel (CH3). The reference voltage end (Vref) outputs a high voltage Vₑ₊, the grounding end (GND) outputs a low voltage Vₑ₋, and incentive voltages (Vₑ₊,Vₑ₋) are applied to the ends of the strain bridge. A first feedback signal V_{BG} is drawn out between the temperature sensing element and the Wheatstone bridge, and the first feedback signal V_{BG} is input to the first input channel CH1. A second feedback signal V_{SP} is drawn out between the first strain gauge SG1 and the second strain gauge SG2, and the second feedback signal V_{SP} is input to the second input channel CH2. A third feedback signal V_{SN} is drawn out between the third strain gauge SG3 and the fourth strain gauge SG4, and the third feedback signal V_{SN} is input to the third input channel CH3.

In one embodiment, the load stress calculation unit calculates a differential voltage Vs = V_{SP} - V_{SN} according to the second feedback signal V_{SP} and the third feedback signal V_{SN}, calculates a compensation function f(V_{BG}, V_{SP}, V_{SN}) according to the first feedback signal V_{BG}, the second feedback signal V_{SP} and the third feedback signal V_{SN}, and obtains a load stress value Fₙ = (V_{SP} - V_{SN}) * K + f(V_{BG}, V_{SP}, V_{SN}) through calculation according to the differential voltage and the compensation function, where K is a strain force coefficient constant of the sensor.

In one embodiment, the state information matrix calculation unit calculates real-time voltage values of the four strain gauges according to the first feedback signal V_{BG}, the second feedback signal V_{SP} and the third feedback signal V_{SN}, and further obtains a state information matrix Sₜ = Matrix(V_{SP}, V_{SN}, V_{BG}, Fₙ) through calculation according to the real-time voltage values and the load stress value Fₙ.

In one embodiment, a state information matrix threshold database is further comprised, the state information matrix threshold database storing state information matrix thresholds S_{TH} corresponding to different sensor application states, and comparing the state information matrix Sₜ with the state information matrix thresholds S_{TH} to obtain failure information. In the meantime, the current state of the sensor is detected according to the load stress value Fₙ and the state information matrix St, and the deviation generated due to the current state of the sensor is corrected.

According to one embodiment of the present invention, a weighing network is proposed, comprising: a load cell array, a collection device and a control terminal. The load cell array comprises several aforementioned load cells. The collection device collects external information about the load cell array. The control terminal connects to each load cell in the load cell array via a power cable and a signal cable, and the control terminal supplies power to the load cells in the load cell array via the power cable and receives signals of the load cells via the signal cable. The control terminal comprises a cable monitoring unit, the cable monitoring unit detecting the current and impedance on the power cable, a cable monitoring unit detecting the voltage and impedance on the signal cable, and the control terminal determining the states of the power cable and the signal cable based on the external information collected by the collection device and a detection signal of the cable monitoring unit.

In one embodiment, the signals of the load cells received by the control terminal via the signal cable comprise a load stress value Fₙ and a state information matrix St for each load cell.

In one embodiment, the external information comprises an arrangement position, the type of a weighted object and time information for each load cell in the load cell array. The control terminal establishes a weighing process database in combination with the external information, and the load stress value Fₙ and the state information matrix St for each load cell.

According to one embodiment of the present invention, a monitoring method for a weighing network is proposed, applied to the aforementioned weighing network, wherein the control terminal collects real-time external information, and a real-time load stress value Fₙ and a real-time state information matrix St for each load cell in real time; and compares the real-time external information, and the real-time load stress value Fₙ and the real-time state information matrix St for each load cell with data stored in a weighing process database to monitor the state of the weighing network.

The load cell, weighing network and monitoring method of the present invention can monitor and analyze information such as the load state, usage process, health conditions and service life of a weighing network composed of digital load cells, and diagnose, analyze and record information such as the network state, node information and communication conditions of the weighing system, thereby ensuring the reliability and precision of the weighing system.

### Brief description of the accompanying drawings

In order to make the above objectives, features and advantages of the present invention more apparent and easier to be understood, the specific embodiments of the present invention are described in detail below in conjunction with the accompanying drawings, in the drawings:
- Fig. 1: is a schematic diagram of a load cell according to one embodiment of the present invention; and
- Fig. 2: Fig. 2 is a schematic diagram of a weighing network according to one embodiment of the present invention.

### Best embodiments of the present invention

The objective of the present invention is to improve the reliability of a weighing system based on digital load cells, and ensure the precision thereof. Proposed in the present invention is a digital load cell, a weighing network composed of the digital load cell, and a monitoring method for the weighing network. By virtue of software and hardware resources integrated inside the digital load cell and a control terminal and in combination of load stress analysis techniques of the sensor, various intelligent digital diagnosis techniques are used comprehensively to monitor and analyze information such as the load stress state, weighing element state and service life of a digital load cell node and monitor, analyze, diagnose and record information such as the usage process, network state and communication conditions of the weighing system.

The basic design idea of the present invention is as follows: a resistive strain gauge is firmly adhered on a force measurement region of a load cell, and a micro strain is generated on the force measurement region when the sensor is loaded, and then the strain gauge is deformed therewith and the resistance changes regularly; according to the principle of Wheatstone bridge, the strain gauges are connected and are driven by utilizing a voltage source, thereby converting load stress of the sensor into a differential voltage signal to be output; the output differential voltage signal is filtered, amplified and analog-to-digital converted, and is converted into weighing information; and in the meantime, analog-to-digital conversion is performed respectively on relevant voltage signals to obtain weighing element state information. After being designed and manufactured according to a certain principle, the load cell has a good repeatability, which ensures the consistency among sensor load information, weighing data information and weighing element state information. The consistency between the sensor load information and weighing data information ensures that the digitalized weighing data can truly reflect the load stress conditions of the sensor; and because of the existence of consistency between the weighing data information and weighing element state information, data of the two is detected by utilizing a digital algorithm and compared with preset thresholds, then real-time state information about the load cell can be obtained, for example, whether a failure such as short-circuit or open-circuit occurs to the bridge composed of strain gauges, whether a failure such as short-circuit or open-circuit occurs to a Ni-Pt resistor which is used as a temperature sensing element, whether asymmetry of strain gauge output due to various factors such as mechanical damage and overload fatigue exists on the sensor.

In the meantime, utilizing the real-time state information about the load cell can correct the deviation of weighing data resulted from the current state, such as slant correction and angle difference correction of the sensor.

In the usage process of the weighing system, the digital load cell converts the applied load into weighing data, and sends same to a control terminal such as an instrument or an industrial personal computer in the form of formatted data. In this process, in combination of multi-dimensional state information such as time and a weighted object type provided by a terminal device such as an instrument or an industrial personal computer, the present invention monitors and analyzes the usage process of the weighing system, such as overload moment recording of the sensor, effective weighing times recording of the sensor, time, frequency and total quantity of the weighted object type and other information. Utilizing the overload moment information about the sensor can provide a recording result when there is a failure caused by sensor overload; utilizing the effective weighing times recording of the sensor in combination with a weighing element state and service life algorithm on the basis of a fatigue limit theory and experimental data provides service life state information about a sensor node, and gives pre-warning information when the end of the fatigue service life approaches; and Utilizing time, frequency and total quantity information about the weighted object type summarizes and analyzes the weighing moment, frequency, weight level, overload times and total quantity of weighing and other information about different weighing object types, thereby acquiring important information about a system user usage process.

The digital load cell needs to construct a certain communication topology network via a wired or wireless medium to send weighing data to a control terminal such as an instrument or an industrial personal computer, and the communication topology network has become a significant constituent part of the weighing system. The present invention monitors voltage signals communicated on a physical layer on a control terminal such as an instrument or an industrial personal computer and a digital load cell. On a control terminal such as an instrument or an industrial personal computer, important information such as instantaneity, retransmission times and error code number about communication data transmission is monitored and analyzed, and the acquired voltage information and data characteristic information is analyzed via a digital algorithm based on the network communication principle and specific applications to acquire state information about the communication system so as to perform state diagnosis and pre-warning prompt.

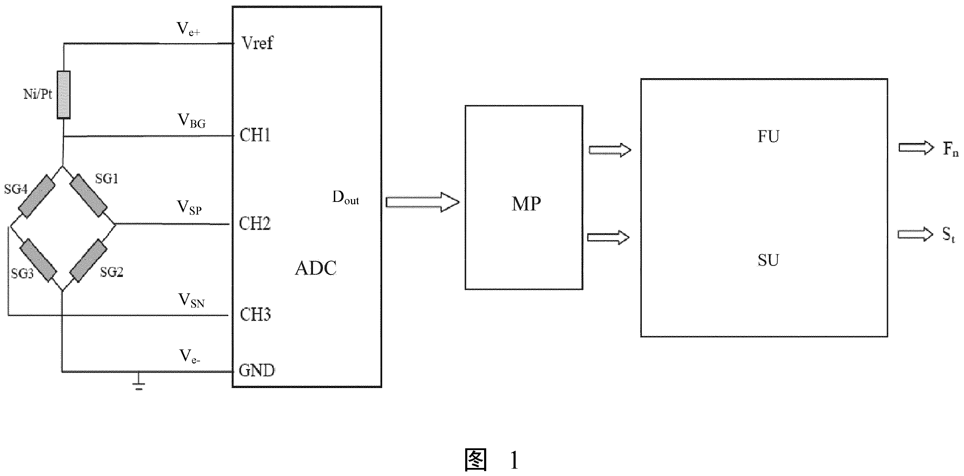

The basic unit of the present invention is a digital load cell. Fig. 1 is a schematic diagram of a load cell according to one embodiment of the present invention. The load cell 100 comprises:
four resistive strain gauges, comprising a first strain gauge SG1, a second strain gauge SG2, a third strain gauge SG3 and a fourth strain gauge SG4, the four resistive strain gauges being mounted on a surface of a sensor elastomer and located in a force measurement region of the sensor elastomer. The resistance value of the resistive strain gauge changes with the deformation after the elastomer is loaded, and the resistance value changes symmetrically. The four resistive strain gauges are connected to form a Wheatstone bridge, and the Wheatstone bridge is then connected to a temperature sensing element in series to form a strain bridge. In the embodiment shown in this figure, the temperature sensing element is a Ni-Pt resistor Ni/Pt.

The digital-to-analog ADC conversion circuit comprises a reference voltage end Vref, a grounding end GND, a first input channel CH1, a second input channel CH2, a third input channel CH3 and an output end Dout. The digital-to-analog ADC conversion circuit incents the strain bridge via the reference voltage end Vref and the grounding end GND, and receives feedback signals of the strain bridge via the first input channel CH1, the second input channel CH2 and the third input channel CH3, and the feedback signals are output via the output end Dout. In the embodiment shown in Fig. 1, the reference voltage end (Vref) outputs a high voltage Vₑ₊, the grounding end (GND) outputs a low voltage Vₑ₋, and incentive voltages (Vₑ₊,Vₑ₋) are applied to the ends of the strain bridge, i.e., the Wheatstone bridge bridges the ends of the series circuit with the temperature sensing resistor Ni/Pt. A first feedback signal V_{BG} is drawn out between the temperature sensing resistor Ni/Pt and the Wheatstone bridge, and the first feedback signal V_{BG} is input to the first input channel CH1. A second feedback signal V_{SP} is drawn out between the first strain gauge SG1 and the second strain gauge SG2, and the second feedback signal V_{SP} is input to the second input channel CH2. A third feedback signal V_{SN} is drawn out between the third strain gauge SG3 and the fourth strain gauge SG4, and the third feedback signal V_{SN} is input to the third input channel CH3.

A signal processor MP receives the feedback signals from the output end Dout of the digital-to-analog ADC conversion circuit, and the signal processor MP comprises a load stress calculation unit FU and a state information matrix calculation unit SU. The load stress calculation unit FU obtains a differential voltage and a compensation function according to the calculation of the feedback signals, and further obtains a load stress value through calculation according to the differential voltage and compensation function. The state information matrix calculation unit SU obtains real-time voltage values of the four resistive strain gauges through calculation according to the feedback signals, and further obtains a state information matrix according to the calculation of the real-time voltage values and the load stress value. In one embodiment, the load stress calculation unit FU calculates a differential voltage Vs = V_{SP} - V_{SN} according to the second feedback signal V_{SP} and the third feedback signal V_{SN}, calculates a compensation function f(V_{BG}, V_{SP}, VsN) according to the first feedback signal V_{BG}, the second feedback signal V_{SP} and the third feedback signal V_{SN}, and obtains a load stress value Fₙ = (V_{SP} - V_{SN}) * K + f(V_{BG}, V_{SP}, V_{SN}) through calculation according to the differential voltage and the compensation function, where K is a strain force coefficient constant of the sensor. The state information matrix calculation unit SU calculates real-time voltage values of the four resistive strain gauges according to the first feedback signal V_{BG}, the second feedback signal V_{SP} and the third feedback signal V_{SN}, and further obtains a state information matrix Sₜ = Matrix(V_{SP}, V_{SN}, V_{BG}, Fₙ) through calculation according to the real-time voltage values and the load stress value Fₙ.

The theoretical basis for the signal processor MP to process feedback signals is as follows:
the differential voltage Vₛ reflects the deformation of the strain gauge, i.e. the conditions of the load stress of the sensor elastomer.

The second feedback signal V_{BG} reflects the voltage of the Wheatstone bridge composed of the strain gauges. In the meantime, since the strain bridge is incented by a constant voltage source, V_{BG} can also reflect the voltage of the Ni/Pt resistor, thus reflecting temperature information about the sensor.

With regard to the first feedback signal V_{BG}, the second feedback signal V_{SP} and the third feedback signal V_{SN}, since one node of the Wheatstone bridge is connected to a zero potential, the arithmetical combination of the three voltages can reflect the voltages of the four strain gauges, thus reflecting state information about the weighing element.

The differential voltage Vs can reflect the conditions of the sensor load stress, and operation can also be conducted on V_{SP}, V_{SN} and V_{BG} via a digital algorithm at the same time to obtain the temperature of the sensor when being loaded, and factors such as a non-linear error, lag error and temperature stability error of the sensor are compensated, thus finally obtaining a true sensor load stress value: Fₙ = (V_{SP} - V_{SN}) * K + f(V_{BG}, V_{SP}, V_{SN}), where K is a strain force coefficient constant of the sensor, and f(V_{BG}, V_{SP}, V_{SN}) is a digital compensation operation function.

By performing arithmetical combination operation on V_{SP}, V_{SN} and V_{BG}, real-time voltage values of four strain gauges are obtained, and in combination of multi-dimensional information such as the load stress value Fₙ and temperature information about the sensor, a state information matrix of the weighing element can be obtained: Sₜ = Matrix(V_{SP}, V_{SN}, V_{BG}, Fₙ). Because of the structure and characteristics of the sensor, there is consistency between the state information matrix and comprehensive information such as the stress actually loaded by the sensor, the temperature and the bridge state. In the sensor production process, state information matrices in different temperatures and different load conditions are recorded. A threshold S_{TH} of the state information matrix is obtained according to the specific analysis of sensor applications. In the actual application process of the sensor, comparing the state information matrix St and the threshold S_{TH} thereof can determine various failure phenomena, such as whether short-circuit or open-circuit exists on the bridge composed of strain gauges, whether short-circuit or open-circuit exists on the Ni-Pt resistor which is used as a temperature sensing element, and whether asymmetry of strain gauge output due to various factors such as mechanical damage and overload fatigue of the sensor exists, thereby achieving intelligent diagnosis of weighing element state information.

Thus, in one embodiment, the load cell may further comprise or be connected to a state information matrix threshold database, the state information matrix threshold database storing state information matrix thresholds S_{TH} corresponding to different sensor application states, and comparing the state information matrix St with the state information matrix thresholds S_{TH} to obtain failure information.

In the meantime, the current state of the sensor is detected according to the state information matrix Sₜ, and the deviation between the load stress value Fₙ and the actual load stress value generated due to the current state of the sensor is corrected.

In this example, a Ni-Pt resistor is used as the temperature sensing element. In fact, other types of temperature sensors can also be used to achieve similar functions.

In this example, the temperature sensing element is connected in series with the Wheatstone bridge composed of strain gauges to form a complete strain bridge. In fact, the temperature sensing element and the Wheatstone bridge composed of strain gauges can be incented respectively, which can also achieve a similar intelligent diagnosis function.

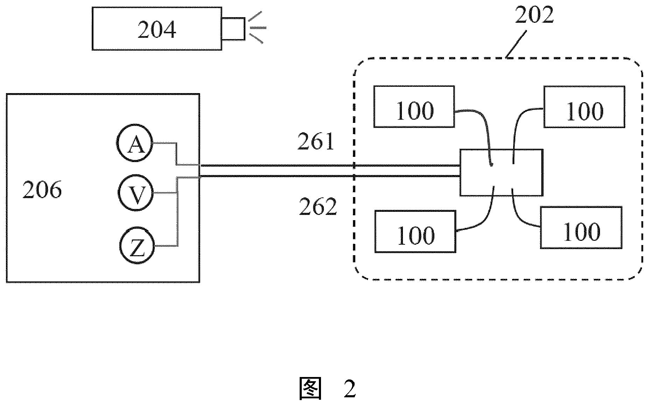

Taking the aforementioned digital load cell as a basis, proposed in the present invention is a weighing network. Fig. 2 is a schematic diagram of a weighing network according to one embodiment of the present invention. The weighing network 200 comprises: a load cell array 202, a collection device 204 and a control terminal 206.

The load cell array 202 comprises several aforementioned load cells 100. The collection device 204 collects external information about the load cell array. In one embodiment, the external information collected by the collection device comprises an arrangement position, the type of a weighted object and time information for each load cell in the load cell array. The collection device 204 mainly comprises a monitoring device and a built-in circuit. The control terminal 206 is connected to each load cell 100 in the load cell array via a power cable 261 and a signal cable 262, and the signals of the load cells received by the control terminal 206 via the signal cable comprise a load stress value Fₙ and a state information matrix St for each load cell. In one embodiment, the control terminal 206 mainly comprises an instrument and an industrial personal computer. In actual applications, when the load cells are topologically connected in a wired manner, various types of cables are generally used for connection, and in practice it is found that a number of failures are sourced from cable failures and cable connection failures. The internal core wires of the cables used by the weighing network can be respectively defined as a power cable and a data signal cable depending on usages. In order to exclude signal errors caused by cable failures or cable connection failures, in the present invention, a circuit with the objective of electrical signal detection of features such as a real-time current, impedance and amplitude value is designed in the control terminal, and by performing real-time detection on the current in the power cable and comparing same with key information such as a current threshold and the number of sensors, whether there is a failure such as damage or short-circuit in the power cable is determined and pre-warned. In general, the data signal cable interface is of high configuration, and accordingly, it makes no actual sense to directly measure the current in the signal cable. In the present invention, by testing electrical signals of features such as impedance and an amplitude value on the data signal cable in combination with information such as a communication network topology structure and the number of sensors, diagnosis and pre-warning prompt for the state of the data signal cable are achieved.

In one embodiment, the control terminal 206 supplies power to the load cells 100 in the load cell array 202 via the power cable 261 and receives signals of the load cells via the signal cable 262. The control terminal 206 comprises a cable monitoring unit, the cable monitoring unit detecting the current and impedance on the power cable 261, and a cable monitoring unit further detecting the voltage and impedance on the signal cable 262. The control terminal 206 determines the states of the power cable 261 and the signal cable 262 based on the external information collected by the collection device and a detection signal of the cable monitoring unit. The control terminal 206 establishes a weighing process database in combination with the external information, and the load stress value Fₙ and the state information matrix St for each load cell. Based on the weighing process database, the control terminal 206 can achieve the following monitoring functions:
a) according to a preset overload threshold, when the load cell is overloaded, the overloaded load and moment are recorded, and this recorded value will be stored in the load cell and sent to the control terminal for storage, so as to be used to monitor the usage conditions of the weighing network, and to provide an analysis basis when the load cell has failed.
b) According to a preset effective load threshold, the load cell records effective weighing times, and in combination with a service life algorithm on the basis of a fatigue limit theory and experimental data and taking the overload times and frequency into consideration, provides service life state information about a load cell node, and gives pre-warning information when the fatigue service life approaches.
c) The control terminal analyzes and records information such as weighing time, frequency and total quantity information about the weighted object type, summarizes and analyzes the weighing moment, frequency, weight level, overload times and total quantity of weighing and other information about different weighing object types, thereby acquiring important information about a system user usage process.
d) The installation positions of the load cells in the weighing network are different, and according to basic physics principle analysis, weighing data of each load cell is related to the installation position thereof, and thus the obtained weighing data is also different. On the premise that there is symmetry in the installation positions of the load cells, the weighing data also has numerical value symmetry determined by position symmetry. The control terminal analyzes and records weighing data and position parameters of the load cells, so as to be able to obtain the usage state conditions of the weighing network by monitoring and diagnosis.
e) The cable monitoring unit in the control terminal monitors the voltage of the signal transmitted in the signal cable in the communication cable, thereby monitoring and analyzing communication signals from a physical layer perspective, and monitoring problems such as damage, short-circuit and mistaken grounding which may exist in the signal cable network.
f) In the process where the control terminal is in communication with the digital sensor, important information such as instantaneity, retransmission times and error code number about communication data transmission is monitored and analyzed, and the acquired voltage information and data characteristic information is analyzed via a digital algorithm based on the network communication principle and specific applications to acquire state information about the communication system so as to perform state diagnosis and pre-warning prompt.
g) A cable monitoring unit is integrated inside the control terminal to perform electrical signal detection of features such as a real-time current, impedance and amplitude value, and by performing real-time detection on the current in the power cable and comparing same with key information such as a current threshold and the number of sensors, whether there is a failure such as damage or short-circuit in the power cable is determined and pre-warned; and by testing electrical signals of features such as impedance and an electrical level amplitude value on the signal cable in combination with information such as a communication network topology structure and the number of sensors, diagnosis and pre-warning prompt for the state of the data signal cable are achieved.

Further proposed is a monitoring method for a weighing network, applied to the aforementioned weighing network, wherein the control terminal collects real-time external information, and a real-time load stress value Fₙ and a real-time state information matrix St for each load cell in real time; and compares the real-time external information, and the real-time load stress value Fₙ and the real-time state information matrix St for each load cell with data stored in a weighing process database to monitor the state of the weighing network.

The functions which can be achieved by the weighing network monitoring method comprise aforementioned functions a) - g).

The load cell, weighing network and monitoring method of the present invention can monitor and analyze information such as the load state, usage process, health conditions and service life of a weighing network composed of digital load cells, and diagnose, analyze and record information such as the network state, node information and communication conditions of the weighing system, thereby ensuring the reliability and precision of the weighing system.

## Claims

1. A load cell, wherein the load cell comprises:
four strain gauges, comprising a first strain gauge (SG1), a second strain gauge (SG2), a third strain gauge (SG3) and a fourth strain gauge (SG4), the four strain gauges being mounted on a surface of a cell deformation part and located in a force measurement region of the cell deformation part, and the four strain gauges being connected to form a Wheatstone bridge and then form a strain bridge with a temperature sensing element;
a digital-to-analog conversion chip circuit, containing a reference voltage end (Vref), a grounding end (GND), a plurality of input channels and a digital output end (Dout), the digital-to-analog conversion circuit incenting the strain bridge via the reference voltage end (Vref) and the grounding end (GND), and receiving feedback signals of the strain bridge respectively via the plurality of input channels, and the feedback signals being output via the digital output end (Dout); and
a signal processor, receiving the feedback signals from the output end (Dout) of the digital-to-analog conversion circuit, **characterized by** the signal processor comprising a load stress calculation unit and a state information matrix calculation unit, the load stress calculation unit obtaining a load stress value through calculation according to the feedback signals, and the state information matrix calculation unit obtaining a state information matrix through calculation according to the feedback signals.

2. The load cell according to claim 1, **characterized in that** the plurality of input channels comprise a first input channel (CH1), a second input channel (CH2) and a third input channel (CH3);
the reference voltage end (Vref) outputs a high voltage Vₑ₊, the grounding end (GND) outputs a low voltage Vₑ₋, and incentive voltages (Vₑ₊,Vₑ₋) are applied to the ends of the strain bridge;
a first feedback signal V_{BG} is drawn out between the temperature sensing element and the Wheatstone bridge, and the first feedback signal V_{BG} is input to the first input channel (CH1);
a second feedback signal V_{SP} is drawn out between the first strain gauge (SG1) and the second strain gauge (SG2), and the second feedback signal V_{SP} is input to the second input channel (CH2); and
a third feedback signal V_{SN} is drawn out between the third strain gauge (SG3) and the fourth strain gauge (SG4), and the third feedback signal V_{SN} is input to the third input channel (CH3).

3. The load cell according to claim 2, **characterized in that** the load stress calculation unit calculates a differential voltage V_{S} = V_{SP} - V_{SN} according to the second feedback signal V_{SP} and the third feedback signal VsN, calculates a compensation function f(V_{BG}, V_{SP}, V_{SN}) according to the first feedback signal V_{BG}, the second feedback signal V_{SP} and the third feedback signal V_{SN}, and obtains a load stress value Fₙ = (V_{SP} - V_{SN}) * K + f(V_{BG}, V_{SP}, V_{SN}) through calculation according to the differential voltage and the compensation function, where K is a strain force coefficient constant of the sensor.

4. The load cell according to claim 3, **characterized in that** the state information matrix calculation unit calculates real-time voltage values of the four strain gauges according to the first feedback signal V_{BG}, the second feedback signal V_{SP} and the third feedback signal V_{SN}, and further obtains a state information matrix Sₜ = Matrix(V_{SP}, V_{SN}, V_{BG}, Fₙ) through calculation according to the real-time voltage values and the load stress value Fₙ.

5. The load cell according to claim 4, **characterized in that** the load cell comprises a state information matrix threshold database, the state information matrix threshold database storing state information matrix thresholds S_{TH} corresponding to different sensor application states, and comparing the state information matrix St with the state information matrix thresholds S_{TH} to obtain failure information.

6. The load cell according to claim 4, **characterized in that** the current state of the sensor is comprehensively detected according to the state information matrix St and the load stress value Fₙ, and the deviation generated due to the current state of the sensor is corrected.

7. A weighing network, **characterized in that** the weighing network comprises:
a load cell array, comprising several load cells according to any one of claims 1-6;
a collection device, the collection device collecting external information about the load cell array; and
a control terminal, the control terminal connecting to each load cell in the load cell array via a power cable and a signal cable, and the control terminal supplying power to the load cells in the load cell array via the power cable and receiving signals of the load cells via the signal cable; and the control terminal comprising a cable monitoring unit, the control terminal determining the states of the power cable and the signal cable based on the external information collected by the collection device and a detection signal of the cable monitoring unit.

8. The weighing network according to claim 7, **characterized in that** the signals of the load cells received by the control terminal via the signal cable comprise a load stress value Fₙ and a state information matrix Sₜ for each load cell.

9. The weighing network according to claim 8, **characterized in that**:
the external information comprises an arrangement position, the type of a weighted object and time information for each load cell in the load cell array; and
the control terminal establishes a weighing process database in combination with the external information, and the load stress value Fₙ and the state information matrix St for each load cell.

10. A monitoring method for a weighing network, applied to the weighing network according to claim 8, **characterized in that** the control terminal collects real-time external information, and a real-time load stress value Fₙ and a real-time state information matrix St for each load cell in real time; and compares the real-time external information, and the real-time load stress value Fₙ and the real-time state information matrix St for each load cell with data stored in a weighing process database to monitor the state of the weighing network.

## Patentansprüche

1. Lastzelle, wobei die Lastzelle Folgendes umfasst:
vier Dehnungsmesstreifen, umfassend einen ersten Dehnungsmessstreifen (SG1), einen zweiten Dehnungsmessstreifen (SG2), einen dritten Dehnungsmessstreifen (SG3) und einen vierten Dehnungsmessstreifen (SG4), wobei die vier Dehnungsmessstreifen auf einer Fläche eines Deformationsteils der Lastzelle montiert sind und sich in einem Kraftmessbereich des Deformationsteils befinden, und wobei die vier Dehnungsmessstreifen verbunden sind, um eine Wheatstone'sche Brückenschaltung zu bilden und dann eine Spannungsbrücke mit einem Temperaturmesselement zu bilden;
eine chipbasierte digital-zu-analog- Wandlerschaltung, welche einen Referenzspannungsanschluss (Vref), einen Erdungsanschluss (GND), eine Vielzahl von Eingabekanälen und einen digitalen Ausgabeanschluss (Dout) enthält, wobei die digital-zu-analog- Wandlerschaltung die Spannungsbrücke über den Referenzspannungsanschluss (Vref) und den Erdungsanschluss (GND) anreizt und Rückkopplungssignale der Spannungsbrücke bzw. über die Vielzahl von Eingabekanälen empfängt, und wobei die Rückkopplungssignale über den digitalen Ausgabeanschluss (Dout) ausgegeben werden; und
einen Signalprozessor, welcher die Rückkopplungssignale vom Ausgabeanschluss (Dout) der digital-zu-analog- Wandlerschaltung empfängt, der Signalprozessor umfasst eine Lastberechnungseinheit und eine Berechnungseinheit für eine Zustandsinformationsmatrix, wobei die Lastberechnungseinheit einen Lastwert durch eine Berechnung gemäss den Rückkopplungssignalen erlangt, und wobei die Berechnungseinheit der Zustandsinformationsmatrix eine Zustandsinformationsmatrix durch eine Berechnung gemäss den Rückkopplungssignalen erlangt.

2. Lastzelle gemäss Anspruch 1, **dadurch gekennzeichnet, dass** die Vielzahl von Eingabekanälen einen ersten Eingabekanal (CH1), einen zweiten Eingabekanal (CH2) und einen dritten Eingabekanal (CH3) umfasst;
wobei der Referenzspannungsanschluss (Vref) eine hohe Spannung Vₑ₊ ausgibt, der Erdungsanschluss (GND) eine niedrige Spannung Vₑ₋ ausgibt und Anreizspannungen (Vₑ₊, Vₑ₋) an den Enden der Spannungsbrücke angelegt werden;
wobei ein erstes Rückkopplungssignal V_{BG} zwischen dem Temperaturmesselement und der Wheatstone'schen Brückenschaltung herausgezogen wird, und wobei das erste Rückkopplungssignal V_{BG} in den ersten Eingabekanal (CH1) eingegeben wird;
wobei ein zweites Rückkopplungssignal V_{SP} zwischen dem ersten Dehnungsmesstreifen (SG1) und dem zweiten Dehnungsmesstreifen (SG2) herausgezogen wird, und wobei das zweite Rückkopplungssignal V_{SP} in den zweiten Eingabekanal (CH2) eingegeben wird; und
wobei ein drittes Rückkopplungssignal V_{SN} zwischen dem dritten Dehnungsmesstreifen (SG3) und dem vierten Dehnungsmesstreifen (SG4) herausgezogen wird; und wobei das dritte Rückkopplungssignal V_{SN} in den dritten Eingabekanal (CH3) eingegeben wird.

3. Lastzelle gemäss Anspruch 2, **dadurch gekennzeichnet, dass** die Lastberechnungseinheit eine Differenzspannung V_{S} = V_{SP} - V_{SN} gemäss dem zweiten Rückkopplungssignal V_{SP} berechnet und wobei das dritte Rückkopplungssignal V_{SN} eine Kompensationsfunktion f(V_{BG}, V_{SP}, V_{SN}) gemäss dem ersten Rückkopplungssignal V_{BG}, dem zweiten Rückkopplungssignal V_{SP} und dem dritten Rückkopplungssignal V_{SN} berechnet, und einen Lastwert Fₙ = (V_{SP} - V_{SN}) * K + f(V_{BG}, V_{SP}, V_{SN}) durch ein Berechnen gemäss der Differenzspannung und der Kompensationsfunktion erlangt, wobei K eine Kraft-Dehnungs-Konstante der Lastzelle ist.

4. Lastzelle gemäss Anspruch 3, **dadurch gekennzeichnet, dass** die Berechnungseinheit der Zustandsinformationsmatrix Echtzeit-Spannungswerte der vier Dehnungsmesstreifen gemäss dem ersten Rückkopplungssignal V_{BG}, dem zweiten Rückkopplungssignal V_{SP} und dem dritten Rückkopplungssignal V_{SN} berechnet, und ferner eine Zustandsinformationsmatrix Sₜ = Matrix(V_{SP}, V_{SM}, V_{BG}, Fₙ) durch eine Berechnung gemäss den Echtzeit-Spannungswerten und dem Lastwert Fₙ erlangt.

5. Lastzelle gemäss Anspruch 4, **dadurch gekennzeichnet, dass** die Lastzelle eine Datenbank für Schwellwerte der Zustandsinformationsmatrix umfasst, wobei die Datenbank Schwellenwerte S_{TH} der Zustandsinformationsmatrix entsprechend unterschiedlichen Lastzellenanwendungszuständen speichert, und die Zustandsinformationsmatrix St mit den Schwellenwerten S_{TH} der Zustandsinformationsmatrix vergleicht, um Fehlerinformationen zu erlangen.

6. Lastzelle gemäss Anspruch 4, **dadurch gekennzeichnet, dass** der aktuelle Zustand der Lastzelle gemäss der Zustandsinformationsmatrix St umfassend erkannt wird und dass der Lastdwert Fₙ und die Abweichung korrigiert sind, welche aufgrund des aktuellen Zustands der Lastzelle erzeugt wird.

7. Wägenetzwerk, **dadurch gekennzeichnet, dass** das Wägenetzwerk Folgendes umfasst:
eine Lastzellenanordnung, umfassend mehrere Lastzellen gemäss einem der Ansprüche 1-6;
eine Sammelvorrichtung, wobei die Sammelvorrichtung externe Informationen über die Lastzellenanordnung sammelt; und
ein Steuerterminal, wobei das Steuerterminal über ein Stromkabel und ein Signalkabel mit jeder Lastzelle in der Lastzellenanordnung verbunden ist, und wobei das Steuerterminal die Lastzellen in der Lastzellenanordnung über das Stromkabel mit Strom versorgt und Signale der Lastzellen über das Signalkabel empfängt; und wobei das Steuerterminal eine Kabelüberwachungseinheit umfasst, wobei das Steuerterminal den Zustand des Stromkabels und den Zustand des Signalkabels basierend auf den externen Informationen, welche durch die Sammelvorrichtung gesammelt wurden, und einem Erkennungssignal der Kabelüberwachungseinheit bestimmt.

8. Wägenetzwerk gemäss Anspruch 7, **dadurch gekennzeichnet, dass** die Signale der Lastzellen, welche durch das Steuerterminal über das Signalkabel empfangen werden, einen Lastwert Fₙ und eine Zustandsinformationsmatrix Sₜ für jede Lastzelle umfassen.

9. Wägenetzwerk gemäss Anspruch 8, **dadurch gekennzeichnet, dass**:
die externen Informationen eine Anordnungsposition, die Art eines gewogenen Objekts und Zeitinformationen für jede Lastzelle in der Lastzellenanordnung umfassen; und
das Steuerterminal eine Wägeprozessdatenbank in Kombination mit den externen Informationen und dem Lastwert Fₙ und der Zustandsinformationsmatrix Sₜ für jede Lastzelle erstellt.

10. Überwachungsverfahren für ein Wägenetzwerk, welches auf das Wägenetzwerk gemäss Anspruch 8 angewandt wird, **dadurch gekennzeichnet, dass** das Steuerterminal externe Echtzeitinformationen und einen Echtzeit-Lastwert Fₙ und eine Echtzeit-Zustandsinformationsmatrix Sₜ für jede Lastzelle in Echtzeit sammelt; und die externen Echtzeitinformationen und den Echtzeit-Lastwert Fₙ und die Echtzeit-Zustandsinformationsmatrix St für jede Lastzelle mit Daten vergleicht, welche in einer Wägeprozessdatenbank gespeichert sind, um den Zustand des Wägenetzwerks zu überwachen.

## Revendications

1. Cellule de charge, dans laquelle la cellule de charge comprend:
quatre jauge de contrainte, comprenant un premier jauge de contrainte (SG1), un deuxième jauge de contrainte (SG2), un troisième jauge de contrainte (SG3) et un quatrième jauge de contrainte (SG4), les quatre jauge de contrainte étant montés sur une surface d'une partie de déformation de cellule et situés dans une région de mesure de la force de la partie de déformation de cellule, et les quatre jauge de contrainte étant reliés pour former un pont de Wheatstone et ensuite former un pont de tension avec un élément de mesure de la température;
un circuit convertisseur numérique-analogique sur puce, contenant une connexion de tension de référence (Vref), une connexion de mise à la terre (GND), une pluralité de canaux d'entrée et une connexion de sortie numérique (Dout), le circuit de conversion numérique-analogique incitant le pont de tension par l'intermédiaire de la connexion de tension de référence (Vref) et la connexion de mise à la terre (GND), et recevant des signaux de retour du pont de tension respectivement par l'intermédiaire de la pluralité de canaux d'entrée, et les signaux de retour étant délivrés en sortie par l'intermédiaire de la connexion de sortie numérique (Dout); et
un processeur de signal, recevant les signaux de retour à partir de la connexion de sortie (Dout) du circuit convertisseur numérique-analogique sur puce, **caractérisé par** le processeur de signal comprenant une unité de calcul de charge et une unité de calcul de matrice d'informations sur l'état, l'unité de calcul de charge obtenant une valeur de charge par calcul selon les signaux de retour, et l'unité de calcul de matrice d'informations sur l'état obtenant une matrice d'informations sur l'état par calcul selon les signaux de retour.

2. Cellule de charge selon la revendication 1, **caractérisée en ce que** la pluralité de canaux d'entrée comprend un premier canal d'entrée (CH1), un deuxième canal d'entrée (CH2) et un troisième canal d'entrée (CH3);
la connexion de tension de référence (Vref) délivre en sortie une haute tension Vₑ₊, la connexion de mise à la terre (GND) délivre en sortie une basse tension Vₑ₋, et des tensions d'incitation (Vₑ₊, Vₑ₋) sont appliquées aux extrémités du pont de tension;
un premier signal de retour V_{BG} est extrait entre l'élément de mesure de la température et le pont de Wheatstone, et le premier signal de retour V_{BG} est entré dans le premier canal d'entrée (CH1);
un deuxième signal de retour V_{SP} est extrait entre le premier jauge de contrainte (SG1) et le deuxième jauge de contrainte (SG2), et le deuxième signal de retour V_{SP} est entré dans le deuxième canal d'entrée (CH2); et
un troisième signal de retour V_{SN} est extrait entre le troisième jauge de contrainte (SG3) et le quatrième jauge de contrainte (SG4), et le troisième signal de retour V_{SN} est entré dans le troisième canal d'entrée (CH3).

3. Cellule de charge selon la revendication 2, **caractérisée en ce que** l'unité de calcul de charge calcule une tension différentielle Vs = V_{SP} - V_{SN} selon le deuxième signal de retour V_{SP} et le troisième signal de retour V_{SN}, calcule une fonction de compensation f(V_{BG}, V_{SP}, V_{SN}) selon le premier signal de retour V_{BG}, le deuxième signal de retour V_{SP} et le troisième signal de retour V_{SN}, et obtient une valeur de charge Fₙ = (V_{SP} - V_{SN}) * K + f(V_{BG}, V_{SP}, V_{SN}) par calcul selon la tension différentielle et la fonction de compensation, où K est une constante de force-élongation de la cellule de charge.

4. Cellule de charge selon la revendication 3, **caractérisée en ce que** l'unité de calcul de matrice d'informations sur l'état calcule des valeurs de tension en temps réel des quatre jauge de contrainte selon le premier signal de retour V_{BG}, le deuxième signal de retour V_{SP} et le troisième signal de retour V_{SN}, et obtient en outre une matrice d'informations sur l'état Sₜ = Matrice(V_{SP}, V_{SN}, V_{BG}, Fₙ) par calcul selon les valeurs de tension en temps réel et la valeur de charge Fₙ.

5. Cellule de charge selon la revendication 4, **caractérisée en ce que** la cellule de charge comprend une base de données de seuils de matrice d'informations sur l'état, la base de données de seuils de matrice d'informations sur l'état sauvegarde des seuils de matrice d'informations sur l'état S_{TH} correspondant à différents états d'application de la cellule de charge, et comparant la matrice d'informations sur l'état St aux seuils de matrice d'informations sur l'état S_{TH} pour obtenir des informations de défaillance.

6. Cellule de charge selon la revendication 4, **caractérisée en ce que** l'état actuel de la cellule de charge est détecté de manière complète selon la matrice d'informations sur l'état St et la valeur de charge Fₙ, et l'écart généré en raison de l'état actuel de la cellule de charge est corrigé.

7. Réseau de pesage, **caractérisé en ce que** le réseau de pesage comprend:
une disposition de cellules de charge, comprenant plusieurs cellules de charge selon l'une quelconque des revendications 1 à 6;
un dispositif de collecte, le dispositif de collecte collectant des informations externes sur la disposition réseau de cellules de charge; et
une borne de commande, la borne de commande étant reliée à chaque cellule de charge dans la disposition de cellules de charge par l'intermédiaire d'un câble d'alimentation et d'un câble de signal, et la borne de commande alimentant les cellules de charge dans la disposition de cellules de charge par l'intermédiaire du câble d'alimentation et recevant des signaux des cellules de charge par l'intermédiaire du câble de signal; et la borne de commande comprenant une unité de surveillance de câble, la borne de commande déterminant la condition du câble d'alimentation et la condition du câble de signal sur la base des informations externes collectées par le dispositif de collecte et d'un signal de détection de l'unité de surveillance de câble.

8. Réseau de pesage selon la revendication 7, **caractérisé en ce que** les signaux des cellules de charge reçus par la borne de commande par l'intermédiaire du câble de signal comprennent une valeur de charge Fₙ et une matrice d'informations sur l'état St pour chaque cellule de charge.

9. Réseau de pesage selon la revendication 8, **caractérisé en ce que**:
les informations externes comprennent une position d'agencement, le type d'un objet pesé et des informations de temps pour chaque cellule de charge dans la disposition de cellules de charge; et
la borne de commande établit une base de données de procédé de pesage en combinaison avec les informations externes, et la valeur de charge Fₙ et la matrice d'informations sur l'état St pour chaque cellule de charge.

10. Procédé de surveillance pour un réseau de pesage, appliqué au réseau de pesage selon la revendication 8, **caractérisé en ce que** la borne de commande collecte des informations externes en temps réel, et une valeur de charge Fₙ en temps réel et une matrice d'informations sur l'état St en temps réel pour chaque cellule de charge en temps réel; et compare les informations externes en temps réel, et la valeur de charge Fₙ en temps réel et la matrice d'informations sur l'état St en temps réel pour chaque cellule de charge à des données stockées dans une base de données de procédé de pesage pour surveiller la condition du réseau de pesage.
